# EUROPEAN PATENT SPECIFICATION

(11) **EP 1 027 224 B1**
(45) Date of publication and mention of the grant of the patent: **09.01.2002**
(21) Application number: 98954475.4
(22) Date of filing: 02.11.1998
(51) Int. Cl.: B60K 6/06, H02K 51/00, F16D 21/08

(54) **A HYBRID PROPULSION SYSTEM FOR A MOTOR VEHICLE**
HYBRIDANTRIEB FÜR FAHRZEUGE
SYSTEME DE PROPULSION HYBRIDE POUR UN VEHICULE MOTEUR

(30) Priority: 04.11.1997 IT TO970967
(43) Date of publication of application: 16.08.2000
(73) Proprietor: MAGNETI MARELLI POWERTRAIN S.p.A., 10138 Torino (IT)
(72) Inventor: MESITI, Domenico, I-10040 Leini' (IT); CAENAZZO, Dario, I-10060 Scalenghe (IT); GARABELLO, Marco, I-10135 Torino (IT)
(74) Representative: Quinterno, Giuseppe
(86) International application number: EP9806922
(87) International publication number: WO9922955

(56) References cited:
- DE-A- 3 243 514
- DE-A- 3 320 950
- DE-A- 3 737 192
- DE-A- 4 323 601
- DE-A- 4 323 602

## Description

The present invention concerns a propulsion system for a motor vehicle, and more specifically, a system of the type defined in the preamble of Claim 1.

The majority of motor vehicles currently produced with an internal combustion engine have an electric starter motor and a generator (typically an alternator), constituted by separate electric machines.

In order to overcome a number of disadvantages with this conventional arrangement, a single reversible rotatable electric machine has been associated with the internal combustion engine, which electric machine acts both as a starter motor and a generator.

In a known arrangement of this kind, the rotatable electric machine is disposed with its shaft parallel to the shaft of the internal combustion engine, and these shafts ara coupled by means of a belt or chain transmission system, including a speed reduction device such as an epicyclic gear. This speed reduction device causes a reduction in the speed of rotation between the shaft of the electric machine and the shaft of the internal combustion engine when the electric machine functions as a starter motor during the starting of the internal combustion engine.

This known arrangement is advantageous in not requiring special modifications or adaptations to the conventional structure of the internal combustion engine. The transmission system between the electric machine and the internal combustion engine is, however, a critical aspect of this arrangement.

DE-A-33 20 950 discloses a system as defined in the preamble of Claim 1. In this prior system the engine shaft is not provided with a flywheel fixed thereto. A separate flywheel member is permanently fixed with the rotor of the electric machine, and can be selectively coupled to the engine shaft through one of two clutches. The said rotor is supported for rotation by the engine shaft.

The object of the present invention is to produce a propulsion system of the kind indicated above, which enables the disadvantages of the known arrangements to be overcome and which is able to perform a number of additional functions such as the recovery of kinetic energy of the motor vehicle, the possibility of effecting the movement of the motor vehicle using electrical traction only, and the implementation of strategies of the"stop and go" type to reduce fuel consumption and polluting emissions.

These and other objects are achieved according to the invention with a propulsion system having the feautures defined in Claim 1.

Further characteristics and advantages of the invention will become clear from the following detailed description, given purely by way of non-limitative example, with reference to the accompanying drawings, in which;
Figure 1 is a partial view in axial section of a first embodiment of a propulsion system according to the invention;
Figure 2 is a partial view in section of a different embodiment of the system according to the invention; and
Figure 3 is a partial view in section of an embodiment not in accordance with claim 1.

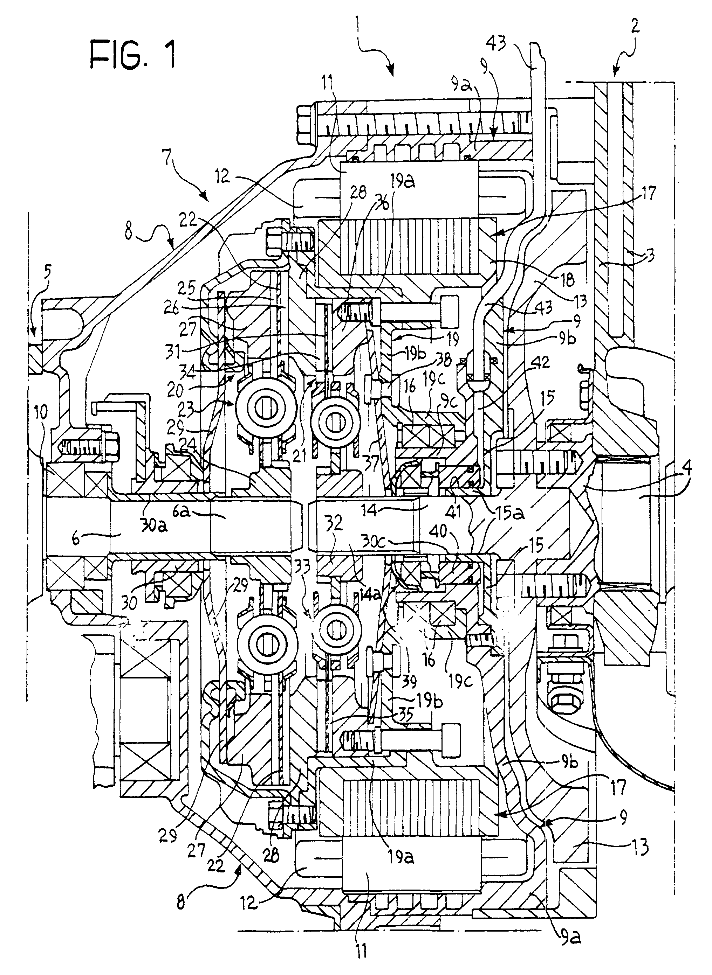

In Figure 1, the reference numeral 1 generally indicates a propulsion system according to the invention.

This propulsion system includes a body or crankcase 3 in which the engine shaft 4 is rotatably supported.

The propulsion system 1 also includes a transmission 5 including, for example, a gear box, with an input shaft 6 coaxial with the shaft 4 of the internal combustion engine 2.

A functional group 7 is interposed between the internal combustion engine 2 and the transmission 5, which group, as will become clearer below, includes a reversible electric machine, preferably of the triphase type, and a pair of friction engagement devices.

The functional group 7 includes a casing formed, in the embodiment illustrated, from two bodies or half-shells 8 and 9 coupled to each other.

The body or half-shell 8, which is facing away from the transmission, has an aperture 10 in which the input shaft 6 of the transmission is rotatably supported, which input shaft extends into the said body 8.

The body or half-shell 9 includes an essentially cylindrical peripheral sleeve 9a, within which the stator 11 of a reversible electric machine is fixed, carrying a plurality of windings 12. A flywheel 13 is welded to the end of the engine shaft 4 facing the intermediate functional group 7, which flywwheel extends into a space defined between the body or half-shell 9 of the functional group 7 and the body or crankcase 3 of the engine 2. A shaft portion 14, coaxial with the engine shaft 4, extends from the central portion of the flywheel 13. The end part 14a of the shaft 14 has a plurality of peripheral longitudinal channels. Similarly, the end part 6a of the input shaft of the transmission 5 has peripheral longitudinal channels.

The half-shell 9 of the intermediate functional group 7 has an essentially transverse wall 9b, the periphery of which connects to the sleeve 9a. This wall 9b forms a tubular hub 9c at its centre, into which the shaft 14 extends. A support body 15 is fixed to the rear of the wall 9b of the body 9, which body 15 also forms a hub 15a that surrounds the shaft 14 and is coaxial with and inside the hub 9c. Support bearings 16 are externally mounted on the hub 9c.

A rotor, generally indicated 17, is rotatably mounted in the stator 11. In the embodiment illustrated, this rotor includes an external annular body 18 with a C-shape section, fixed to an inner body 19. This latter has an external annular sleeve 19a, a radially intermediate portion 19b, and a radially innermost tubular portion 19c in the shape of a hub and rotatably mounted on the support bearings 16.

The functional group 7 includes two friction engagement devices, generally indicated 20 and 21 in Figure 1. As will become clearer below, the clutch 20 controls the coupling between the rotor 17 of the electric machine and the input shaft 6 of the transmission, while the other clutch 21 controls the coupling between this rotor and the shaft 4 of the internal combustion engine.

The clutch 20 includes a disc 22 connected by a flexible coupling 23 to a hub 24 mounted with channelled coupling on the end 6a of the input shaft 6 of the transmission 5, so that it is fixed in rotation with this shaft, but axially translatable with respect thereto.

The disc 22 has friction linings 25 and 26, respectively, on two of its faces, the first facing a thrust ring 27 and the second facing an annular element 28 fixed in rotation with the rotor 17 of the electric machine.

A cup spring 29 is associated with the thrust ring 27, which spring is located within the input shaft 6 of the transmission, and with which a control sleeve 30 slidingly mounted on a sleeve 30a coaxial with the said shaft co-operates in known way.

The axial position of the control sleeve 30 is controllable by the driver of the motor vehicle, for example, by means of a pedal and an associated mechanical or hydraulic transmission system.

The friction engagement 20 is preferably of the type that is normally closed.

The friction engagement 21 includes a disc 31 connected to a sleeve 32 by means of a flexible coupling 33 of known type. Associated friction linings 34 and 35 are applied to the two faces of the disc 31, the one facing the ring 28 and the other facing a thrust ring 36 fixed in rotation with the rotor 17 of the electric machine.

The sleeve 32 is mounted with channelled coupling on the end 14a of the shaft 14 and is therefore fixed in rotation with the shaft 4 of the internal combustion engine, but is axially translatable with respect thereto.

A cup spring 37 is associated with the thrust ring 36, disposed about the shaft 14 and held to the body 19 of the rotor 17 by suitable pins 38. This spring tends to urge the thrust ring 36 in engagement with the friction lining 35 of the disc 31.

The reference numeral 39 indicates a thrust bearing mounted coaxially on the shaft 14 and slidable on a sleeve 30c mounted thereon, within the hub 9c of the body 9, on the opposite side to the thrust ring 36 with respect to the spring 37.

The thrust bearing 39 is interposed between the radially innermost portion of the spring 37 and an annular piston 40 mounted so as to be sealingly slidable in an annular seat or chamber 41 coaxial with the shaft 14.

An essentially radial passage 42 is formed in the body 9, which passage opens into the chamber 41 behind the piston 40. A tube 43 is connected to the passage 42 and enables the supply of a hydraulic fluid which causes the piston 40 to slide towards the spring 37 in order to open the friction engagement 21 by means of this spring.

The supply of pressurised fluid to the tube 43 is controllable by means of a hydraulic circuit, which is controlled by an electronic unit, not shown.

During operation, the friction engagement devices 20 and 21 are controllably independently of each other.

By means of the control of these friction engagement devices, a plurality of functions can be achieved, the most important of which are described below.

### Starting the Internal Combustion Engine

Starting the engine 2 occurs by utilising the electric machine 11, 17 as a starter motor. To this end, the friction engagement devices 20 and 21 are both open, or the clutch 21 is open and the gear is put into neutral. Under these conditions, the rotor 17 of the electric machine is uncoupled from both the motor wheels and the shaft 4 of the engine 2. The electric machine can then be connected to a power supply (the battery on board the motor vehicle and the associated inverter) and act as an electric motor. Once the rotor 16 reaches a certain speed of rotation (a condition detectable by known sensors), the control unit causes the pressure supplied to the tube 43 to be released so that the friction engagement 21 is closed by the spring 37. The rotor 17 is thus coupled with the shaft 4 of the internal combustion engine in order to start this latter.

Once the internal combustion engine has been started, the supply of current to the electric machine 11, 17 is stopped, and the driver can close the friction engagement 20 in order to couple the transmission 5 with the shaft 4 of the internal combustion engine by means of the rotor 17, so that the motor vehicle moves.

### Generation of Electrical Energy

When the motor vehicle is running, the rotor 17 is rotated by the shaft 4 of the internal combustion engine 2. The electric machine now acts as a generator to supply the various electrical/electronic devices on board, and ensure the maintenance of an adequate level of charge of the on board battery.

### Recovery of the Kinetic Energy of the Motor Vehicle

The electronic unit associated with the propulsion system can be disposed so that, when the motor vehicle is braking, the friction engagement 21 is opened, while the friction engagement 20 is closed. In this situation, the rotor 17 of the electric machine is rotated by the shaft 6 of the transmission 5. Under these conditions, the electric motor acts as a brake and generates electrical energy, thus recoverng some of the kinetic energy of the motor vehicle.

### Moving the Motor Vehicle Using Electric Traction

The propulsion system enables the motor vehicle to be moved using electric traction, for example, for manoeuvring in small spaces, in queues, or when passing through areas in which exhaust gas emissions are to be avoided. In order to achieve movement purely by way of electricity, the control unit associated with the propulsion system opens the friction engagement 21. The electric machine can be supplied with energy from the vehicle battery, and operates as an electric motor coupled with the transmission 5, with the friction engagement 20 closed.

### "Stop and Go" Running

When the vehicle is slowing down or has stopped, for example, at traffic lights, the engine 2 can be switched off. The friction engagement 21 is open, while the clutch 20 is usually closed. The internal combustion engine is then restarted in order to move off, as described above.

### "Active Flywheel" Function

When the friction engagement 21 is closed, the rotor 17 of the electric machine is fixed in rotation with the shaft 4 of the internal combustion engine 2 and, in fact, constitutes a supplementary flywheel coupled with this shaft.

During normal operation, the shaft 4 of the internal combustion engine 2 varies in the speed of rotation, and these variations, transmitted to the body of the motor vehicle through the mountings of the engine 2, give rise to vibrations.

In the propulsion system according to the invention, the variations in speed and torque of the internal combustion engine 2, and the consequent vibrations transmitted to the structure of the motor vehicle, can be compensated for by means of the suitable control of the torque of the electric motor, suitably phased with the cycle of the internal combustion engine in such a way that the rotor 17, which is torsionally fixed to the engine shaft 4, slows down this shaft when it tends to accelerate, and vice versa.

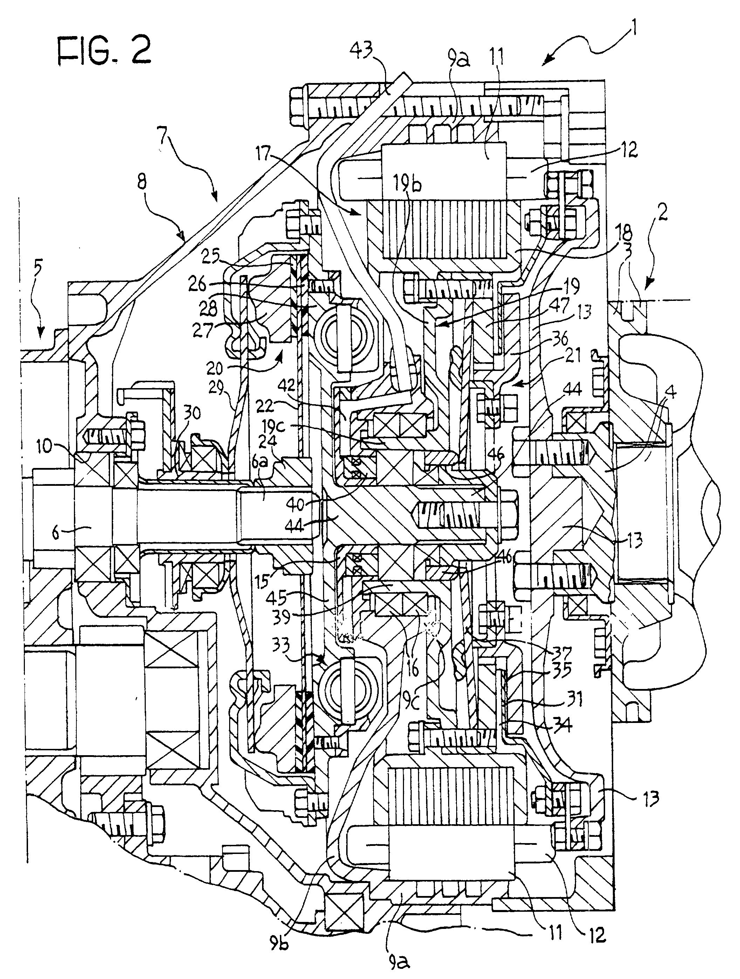

Figure 2 shows a first embodiment of the propulsion system according to the invention. In this drawing, the parts and elements that are the same as or equivalent to those already described above with reference to Figure 1 have been referred to using the same reference numerals.

The embodiment of Figure 2 has the same functionality as that of Figure 1, and differs essentially from the structural point of view in the following ways.

A flywheel 13 is still connected to the end of the engine shaft 4 facing the intermediate functional group 7, which flywheel, however, no longer forms the shaft portion 14 of Figure 1.

The half-shell 9 which acts as a support body of the electric machine has its transverse wall facing the transmission 5, and forms a hub 9c within which the support bearings 16 are located.

The rotor 17 also includes a peripheral annular body 18 having a C-shape section and fixed to an internal body 19. A shaft 44, coaxial with the shaft 4 of the internal combustion engine and the shaft 6 of the transmission, is fixed to the central portion of the internal body 19. The end of the shaft 44 facing the transmission 5 connects with an integral disc. portion 45 to which, via the flexible coupling device 33, is connected a ring 28 facing the friction lining 26 of the disc 22 of the friction engagement 20. This disc 22 is fixed directly to the sleeve 24 without an interposed flexible coupling.

The support body 15, in which the piston 40 is mounted so as to be sealingly slidable, is located directly about the shaft 44 of the rotor.

The portion 19 of the rotor has a tubular formation or hub 19c coaxial with the shaft 44 and which extends towards the support body 15. The support bearings 16 are interposed between this hub 19c and the hub 9c of the support body 9 of the electric machine. A thrust bearing 39 is slidingly mounted about the shaft 44 of the rotor, disposed axially between the piston 40 and a plurality of thrust pins 46 which pass through the body 19 of the rotor and engage the radially innermost portion of the cup spring 37 of the friction engagement 21. The periphery of this spring 37 is engaged against a ring 47 fixed to the body 19 of the rotor.

Within the friction engagement 21, the thrust ring 36 is located between the ring 47 and the flywheel 13. This thrust ring is slidingly mounted with respect to the ring 47 in which it is mounted with a channelled coupling. The friction linings 34 and 35 of the friction engagement 21 are carried by an annular disc 31 connected to the periphery of the flywheel 13 with possibile limited axial movement with respect thereto.

A substantial difference between the arrangement according to Figure 2 and that shown in Figure 1 is in the different connection of the rotor 17 of the electric machine with the shaft 4 of the engine 2. In the arrangement according to Figure 2, this coupling is formed without an elastic flexible coupling joint and this enables a better development of torque with very dynamic variations. This can be particularly advantageous, for example, in the "active flywheel" function described above.

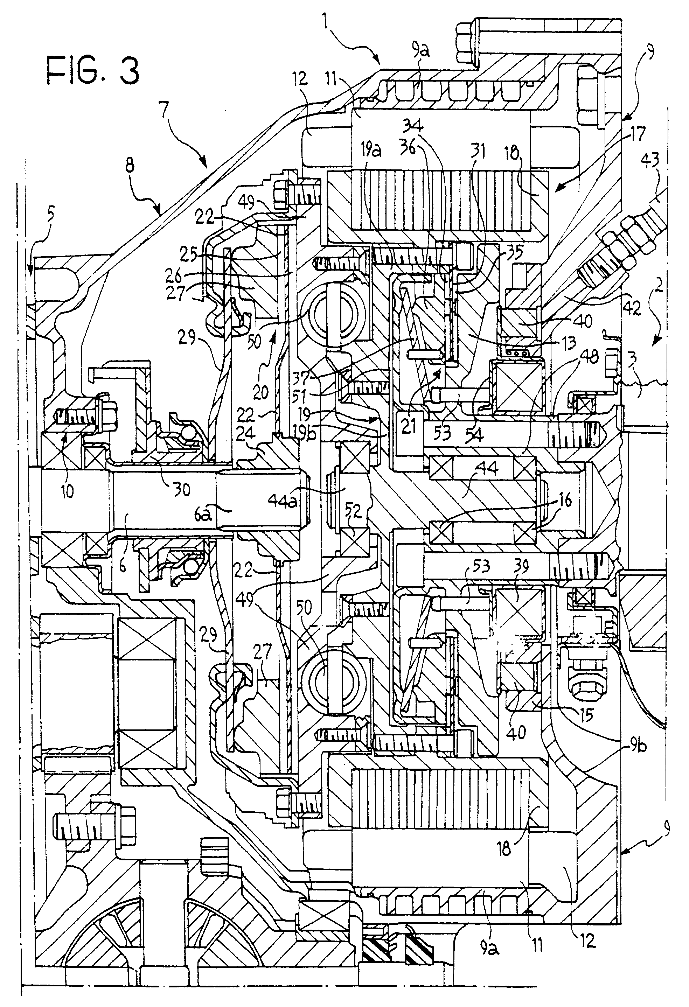

Figure 3 illustrates a further embodiment of a propulsion system.

In Figure 3, the parts and components already described with reference to the preceding figures have been given the same reference numerals.

In comparision with the embodiments shown in Figures 1 and 2, in the arrangement shown in Figure 3, a tubular hub 48, within which support bearings 16 are located, is now fixed to the shaft 4 of the internal combustion engine 2. A flywheel 13 extends from the outer surface of the hub 48. A shaped ring 51 is fixed to the end of the hub 48 facing the transmission 5.

The rotor 17 of the electric machine includes a peripheral annular body 18 with a C-shape section to which is fixed an inner body 19 having a peripheral sleeve 19a, a disc portion 19b and a shaft 44 that engages in the hub 48 of the shaft 4 of the internal combustion engine with interposed support bearings 16. The shaft 44 has an axial extension 44a facing the transmission 5. A ring 49 is mounted on this extension 44a of the shaft 44 with an interposed support bearing 52.

The ring 49 and the disc portion 19b of the body 19 of the rotor are coupled together by a plurality of elastic elements 50 so that they form a two-mass flywheel.

The ring 49 faces the friction lining 26 carried by the disc 22 of the friction engagement 20. The disc 22 is mounted directly on the sleeve 24 without interposed flexible couplings.

The friction engagement 21 that controls the coupling between the rotor of the electric machine and the shaft 4 of the engine 2 includes an annular disc 31 fixed in rotation with the rotor and provided on opposite sides with friction linings 34 and 35.

The disc 31 is interposed between the flywheel 13 and a thrust ring 36 located in axially translatable manner between the flywheel 13 and the body 19 of the rotor 17. A cup spring 37 is associated with the thrust ring 36, the radially innermost portion of which spring presses against the end of bolts 53 mounted in axially slidable manner through corresponding openings formed in the radially innermost portion of the flywheel 13. The other ends of the bolts 53 press against a shaped annular element 54 on which, on the opposite side, a plurality of pistons 40 act. These pistons are mounted inside the support body 15 fixed to the wall 9b of the half-shell 9 that acts as a support body for the electric machine.

The modality of operation and, in particular, the functions achievable with the propulsion system of Figure 3 are substantially the same as those described with reference to the embodiments of Figures 1 and 2 which are in accordance to the invention.

The propulsion system according to the invention has numerous advantages.

In the first instance, the functional group 7 interposed between the engine 2 and the transmission 5 can be produced with very limited dimensions.

The electric machine can be pre-assembled and tested before its assembly between the engine 2 and the transmission 5. This pre-assembled machine can be interfaced with different kinds of combustion engine and/or different kinds of transmission.

The functional group 7 further enables a plurality of functions to be performed which, in general, enable an improvement in the energy efficiency and an appreciable reduction in the fuel consumption and exhaust gas emissions.

Naturally, the principle of the invention remaining the same, the embodiments and the details of construction can be widely varied with respect to that described and illustrated by way of non-limitative example, without by this departing from the scope of the invention as defined in the accompanying claims.

## Claims

1. A propulsion system (1) for a motor vehicle, including
an internal combustion engine (2),
a transmission (5),
clutch means (20, 21) between the shaft (4) of the internal combustion engine (2) and the input shaft (6) of the transmission (5), and
a rotatable reversible electric machine (11, 17) which includes a support casing (9), a stator (11) and a rotor (17) placed within the stator (11), and which is adapted to operate as an electric starter motor for the internal combustion engine (2), and as an electric generator; the said electric machine (11, 17) being interposed between the internal combustion engine (2) and the transmission (5), and being mounted coaxial with the shaft (4) of the said engine (2) and the input shaft (6) of the transmission (5);
the said clutch means including
a first clutch (20) for controlling the coupling between the rotor (17) of the electric machine and the transmission (5), and
a second clutch (21) for controlling the coupling between the rotor (17) of the electric machine and the shaft (4) of the internal combustion engine (2);
the said first and second clutches (20, 21) being selectively controllable independently of each other;
**characterised in that**
a flywheel (13) is permanently fixed to the shaft (4) of said engine (2) ; and
the rotor (17) of the electric machine (11, 17) is supported for rotation by the casing (9) of the electric machine (11, 17).

2. A propulsion system according to Claim 1, wherein said second clutch (21) includes a coupling disc member (31) which is permanently connected for rotation with the said flywheel (13).

3. A system according to Claim 1 or 2, **characterised in that** the said clutches (20, 21) are friction engagement devices.

4. A system according to one of the preceding Claims, **characterised in that** the said second clutch (21) is of electrohydraulically controlled type.

5. A system according to Claim 3 or 4, **characterised in that** each clutch (20; 21) includes an associated disc (22; 31) provided with linings of a friction material (25, 26; 34, 35), an associated axially translatable thrust ring (27) 36), and an associated abutment member (29, 49; 28, 47, 13) located on tine opposite side of the thrust ring with respect to the disc, and rotated by the rotor (17) of the electric machine.

6. A system according to Claim 5, **characterised in that** the said clutches (20, 21) include a single abutment member element (28; Figure 1) which co-operates with the disc (22, 31) of one and the other clutch (20, 21).

7. A system according to Claims 5 and 6,
**characterised in that** the disc (31) of the second clutch (21) is fixed to the said flywheel (13; Figure 2).

8. A system according to Claim 1, **characterised in that** the rotor (17) of the electric machine is capable of being coupled to the said flywheel (13) by means of elastic means (33) so that the rotor (17) and said flywheel (13) together form a two-mass flywheel (Figure 1).

9. A system according to any preceding claim, **chararcterised in that** the said electric machine (11, 17) is of the triphase type.

## Patentansprüche

1. Antriebssystem (1) für ein Kraftfahrzeug mit
einem Verbrennungsmotor (2),
einer Übersetzung (5),
einer Kupplungsvorrichtung (20, 21) zwischen der Welle (4) des Verbrennungsmotors (2) und der Antriebswelle (6) der Übersetzung (5), und
einer drehbaren, reversiblen elektrischen Maschine (11, 17), die ein Traggehäuse (9), einen Stator (11) und einen Rotor (17) aufweist, der im Stator (11) angeordnet und so aufgebaut ist, dass er als elektrischer Anlassermotor für den Verbrennungsmotor (2) sowie als Lichtmaschine arbeitet; wobei die elektrische Maschine (11, 17) zwischen dem Verbrennungsmotor (2) und der Übersetzung (5) liegt und koaxial mit der Welle (4) des Motors (2) sowie der Antriebswelle (6) der Übersetzung (5) angeordnet ist;
wobei die Kupplungsvorrichtung aufweist
eine erste Kupplung (20), um den Kupplungsvorgang zwischen dem Rotor (17) der elektrischen Maschine und der Übertragung (5) zu steuern, und
eine zweite Kupplung (21), um den Kupplungsvorgang zwischen dem Rotor (17) der elektrischen Maschine und der Welle (4) des Verbrennungsmotors (2) zu steuern;
wobei die erste und die zweite Kupplung (20, 21) wahlweise unabhängig voneinander gesteuert werden können;
**dadurch gekennzeichnet, dass**
ein Schwungrad (13) dauernd an der Welle (4) des Motors (2) befestigt ist; und
der Rotor (17) der elektrischen Maschine (11, 17) im Gehäuse (9) der elektrischen Maschine (11, 17) drehbar gelagert ist.

2. Antriebssystem gemäß Anspruch 1, wobei die zweite Kupplung (21) ein scheibenförmiges Kupplungselement (31) aufweist, das dauernd für eine Drehung mit dem Schwungrad (13) verbunden ist.

3. System gemäß Anspruch 1 oder 2, **dadurch gekennzeichnet, dass** die Kupplungen (20, 21) Reibungskupplungen sind.

4. System gemäß einem der bisherigen Ansprüche, **dadurch gekennzeichnet, dass** die zweite Kupplung (21) eine elektrohydraulisch gesteuerte Kupplung ist.

5. System gemäß Anspruch 3 oder 4, **dadurch gekennzeichnet, dass** jede Kupplung (20; 21) eine zugeordnete Scheibe (22; 31) aufweist, die mit Belägen aus einem Reibungsmaterial (25, 26; 34, 35), einem zugeordneten axial verschiebbaren Druckring (27; 36) sowie einem zugeordneten Auflageelement (29, 49; 28, 47, 13) versehen ist, das an der gegenüber liegenden Seite des Druckrings hinsichtlich der Scheibe angeordnet ist und vom Rotor (17) der elektrischen Maschine in Drehung versetzt wird.

6. System gemäß Anspruch 5, **dadurch gekennzeichnet, dass** die Kupplungen (20, 21) ein einziges Auflageelement (28; Fig. 1) aufweisen, das mit der Scheibe (22, 31) der einen und der anderen Kupplung (20, 21) zusammenwirkt.

7. System gemäß Anspruch 5 und 6, **dadurch gekennzeichnet, dass** die Scheibe (31) der zweiten Kupplung (21) am Schwungrad (13; Fig. 2) befestigt ist.

8. System gemäß Anspruch 1, **dadurch gekennzeichnet, dass** der Rotor (17) der elektrischen Maschine mit dem Schwungrad (13) über ein elastisches Bauelement (33) so gekuppelt werden kann, dass der Rotor (17) und das Schwungrad (13) miteinander ein Schwungrad mit zwei Massen (Fig. 1) bilden.

9. System gemäß irgendeinem der bisherigen Ansprüche, **dadurch gekennzeichnet, dass** die elektrische Maschine (11, 17) eine dreiphasige Maschine ist.

## Revendications

1. Système de propulsion (1) pour un véhicule à moteur, comprenant:
un moteur à combustion interne (2),
une transmission (5),
des moyens d'embrayage (20, 21) entre l'arbre (4) du moteur à combustion interne (2) et l'arbre d'entrée (6) de la transmission (5), et
une machine électrique réversible pouvant être mise en rotation (11, 17) qui comprend un boîtier support (9), un stator (11) et un rotor (17) placé à l'intérieur du stator (11), et qui est adapté pour servir de démarreur électrique pour le moteur à combustion interne (2) et de génératrice électrique ; ladite machine électrique (11, 17) étant interposé entre le moteur à combustion interne (2) et la transmission (5) et étant montée de manière coaxiale à l'arbre (4) dudit moteur (2) et à l'arbre d'entrée (6) de la transmission (5);
lesdits moyens d'embrayage comprenant:
un premier embrayage (20) destiné à commander l'accouplement entre le rotor (17) de la machine électrique et la transmission (5), et
un deuxième embrayage (21) destiné à commander l'accouplement entre le rotor (17) de la machine électrique et l'arbre (4) du moteur à combustion interne (2);
lesdits premier et deuxième embrayages (20, 21) pouvant être commandés de manière sélective, indépendamment l'un de l'autre;
**caractérisé en ce que**
un volant d'inertie (13) est fixé de façon permanente à l'arbre (4) dudit moteur (2); et
le rotor (17) de la machine électrique (11, 17) est soutenu d'une manière permettant la rotation par le boîtier (9) de la machine électrique (11, 17).

2. Système de propulsion selon la revendication 1, dans lequel ledit deuxième embrayage (21) comprend un élément formant disque d'accouplement (31) qui est relié de façon permanente et d'une manière permettant la rotation audit volant d'inertie (13).

3. Système selon la revendication 1 ou 2, **caractérisé en ce que** lesdits embrayages (20, 21) sont des dispositifs à engagement par friction.

4. Système selon l'une des revendications précédentes, **caractérisé en ce que** ledit deuxième embrayage (21) est de type à commande électro-hydraulique.

5. Système selon la revendication 3 ou 4, **caractérisé en ce que** chaque embrayage (20; 21) comprend un disque associé (22; 31) pourvu de garnitures de friction (25, 26; 34, 35), un flasque de débrayage associé pouvant se déplacer axialement (27; 36), et un élément de butée associé (29, 49; 28, 47, 13) situé sur le côté du flasque de débrayage opposé au disque et mis en rotation par le rotor (17) de la machine électrique.

6. Système selon la revendication 5, **caractérisé en ce que** lesdits embrayages (20, 21) comprennent un seul élément de butée (28; figure 1) qui coopère avec le disque (22, 31) de l'un et l'autre embrayage (20, 21).

7. Système selon les revendications 5 et 6, **caractérisé en ce que** le disque (31) du deuxième embrayage (21) est fixé audit volant d'inertie (13; figure 2).

8. Système.selon la revendication 1, **caractérisé en ce que** le rotor (17) de la machine électrique peut être couplé audit volant d'inertie (13) au moyen de moyens élastiques (33) de telle façon que le rotor (17) et ledit volant d'inertie (13) forment ensemble un volant d'inertie à deux masses (figure 1).

9. Système selon l'une quelconque des revendications précédentes, **caractérisé en ce que** ladite machine électrique (11, 17) est de type triphasé.
